# EUROPÄISCHE PATENTSCHRIFT

(11) **EP 3 153 281 B1**
(45) Veröffentlichungstag und Bekanntmachung des Hinweises auf die Patenterteilung: **21.08.2019**
(21) Anmeldenummer: 16187731.1
(22) Anmeldetag: 08.09.2016
(51) Int. Cl.: B25F 5/00

(54) **WERKZEUGANALYSEEINRICHTUNG UND VERFAHREN ZUR ANALYSE EINER BEARBEITUNG EINES WERKSTÜCKS MIT EINEM WERKZEUG**
TOOL ANALYSIS DEVICE AND METHOD FOR ANALYSIS OF THE PROCESSING OF A WORKPIECE WITH A TOOL
DISPOSITIF D'ANALYSE D'OUTIL ET PROCÉDÉ D'ANALYSE D'USINAGE D'UNE PIÈCE À USINER À L'AIDE D'UN OUTIL

(30) Priorität: 09.10.2015 DE 102015219564
(43) Veröffentlichungstag der Anmeldung: 12.04.2017
(73) Patentinhaber: ROBERT BOSCH GMBH, 70442 Stuttgart (DE)
(72) Erfinder: Kiesslich, Marcus, 71570 Oppenweiler (DE)
(74) Vertreter: Thürer, Andreas

(56) Entgegenhaltungen:
- EP-A1- 1 645 921
- EP-A1- 2 502 712
- WO-A1-2006/059927
- DE-A1-102010 034 151
- US-A1- 2010 057 243
- US-A1- 2010 058 901

## Beschreibung

Die vorliegende Erfindung bezieht sich auf eine Werkzeuganalyseeinrichtung und ein Verfahren zur Analyse einer Bearbeitung eines Werkstücks mit einem Werkzeug. Ähnliche Analyseeinrichtungen sind aus US 2010/0057243, US 2010/0058901 oder EP 1645921 bekannt.

In Fertigungsanlagen, wie Fertigungsstraßen für Fahrzeuge, wie Kraftfahrzeuge, Flugzeuge, usw., Einrichtungsgegenstände usw., werden oft Werkzeuge eingesetzt, welche Werkstücke behandeln. Solche Werkzeuge sind beispielsweise Nietwerkzeuge oder Schraubwerkzeuge oder Bohrwerkzeuge, Stanzwerkzeuge, usw. Ein solches Werkzeug verbindet dabei beispielsweise zwei Enden eines Werkstücks oder zwei oder mehr Werkstücke miteinander mit einem Niet oder einer Schraube. Oder mit dem Werkzeug wird eine Öffnung in das Werkstück gebohrt oder gestanzt. Bei der Serienproduktion in den Fertigungsanlagen wird zum einen ein Vorgang häufig wiederkehrend ausgeführt, oft bei jedem der zu produzierenden Gegenstände.

Bei der Bearbeitung eines Werkstücks oder mehrerer Werkstücke mit dem Werkzeug sind von einem Benutzer in der Regel bestimmte Bewegungen auszuführen und gegebenenfalls Wegstrecken zurückzulegen. Hierbei ist im Zuge der Optimierung der Fertigung oft eine zeitliche Optimierung der bei der Bearbeitung des Werkstücks erforderlichen Bewegungen gefordert. Dabei sollen mit möglichst wenig körperlichem Einsatz des Benutzers des Werkzeugs die Bewegungen, die bei der Bearbeitung des Werkstücks erforderlich sind, so gering wie möglich sein.

Problematisch ist hierbei, dass sich die Linienauslegungen der Fertigungsanlagen immer wieder ändern. Noch dazu ist es im Vorhinein oft schwierig, unterschiedliche Möglichkeiten bei der Führung des Werkzeugs oder unterschiedliche Fertigungskonzepte in Bezug auf die resultierenden Bearbeitungszeiten zu bewerten.

In der Praxis sind die Herangehensweisen eines Benutzers bei der Führung des Werkzeugs und die Fertigungskonzepte nicht immer optimal gewählt. Daher entstehen unter vergleichsweise erhöhtem körperlichem Einsatz der Benutzer der Werkzeuge oft längere Bearbeitungszeiten als nötig. Als Folge davon ergibt sich eine verminderte Fertigungseffektivität an den Fertigungsanlagen.

Daher ist es Aufgabe der vorliegenden Erfindung, eine Werkzeuganalyseeinrichtung und ein Verfahren zur Analyse einer Bearbeitung eines Werkstücks mit einem Werkzeug bereitzustellen, mit welchen die zuvor genannten Probleme gelöst werden können. Insbesondere sollen eine Werkzeuganalyseeinrichtung und ein Verfahren zur Analyse einer Bearbeitung eines Werkstücks mit einem Werkzeug bereitgestellt werden, bei welchen der körperliche Einsatz der Benutzer der Werkzeuge verringert wird, um die Effektivität bei der Fertigung von Gegenständen zu erhöhen und damit den Fertigungsprozess zu optimieren.

Diese Aufgabe wird durch eine Werkzeuganalyseeinrichtung nach Patentanspruch 1 gelöst.

Vorteilhafte weitere Ausgestaltungen der Werkzeuganalyseeinrichtung sind in den abhängigen Patentansprüchen angegeben.

Mit der Werkzeuganalyseeinrichtung ist es möglich, manuelle Vorgänge mit Hilfe einer Analyse der Bewegungen des Benutzers des Werkzeugs zu optimieren. Als Folge davon können Taktzeiten bei der Fertigung von Gegenständen verkürzt werden.

Noch dazu können bei stationärer Technik Verfahrwege von Anlagen und Robotern optimiert werden.

Ein weiterer Vorteil der Werkzeuganalyseeinrichtung besteht darin, dass Wege transparent gemacht werden können, die ein Werker an einer Fertigungsanlage zurücklegt. Dadurch können verschiedene Bearbeitungskonzepte, welche an der Fertigungsanlage angewandt werden, verglichen und optimiert werden.

Die Werkzeuganalyseeinrichtung ermöglicht es somit, die Effektivität des Benutzers des Werkzeugs beim Lösen seiner Aufgaben zu steigern. Dabei kann der Benutzer seinen körperlichen Einsatz so gering wie möglich halten.

Die Werkzeuganalyseeinrichtung kann Teil eines Werkzeugs oder einer Bewegungsvorrichtung sein, die insbesondere als Roboter oder Fertigungsanlage ausgestaltet ist.

Die Aufgabe wird zudem durch ein Verfahren zur Analyse einer Bearbeitung eines Werkstücks mit einem Werkzeug nach Patentanspruch 10 gelöst.

Das Verfahren erzielt die gleichen Vorteile, wie sie zuvor in Bezug auf die Werkzeuganalyseeinrichtung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein Blockschaltbild einer Fertigungsanlage, in welcher ein Werkzeug mit einer Werkzeuganalyseeinrichtung gemäß einem ersten Ausführungsbeispiel zum Einsatz kommt;
Fig. 2 ein Blockschaltbild eines Werkzeugs mit einer Werkzeuganalyseeinrichtung gemäß einem zweiten Ausführungsbeispiel;
Fig. 3 eine schematische Darstellung eines Lageplans zur Visualisierung einer Wegeigenschaft bei der Führung eines Werkezugs gemäß einem dritten Ausführungsbeispiel.

In den Figuren sind gleiche oder funktionsgleiche Elemente, sofern nichts anderes angegeben ist, mit denselben Bezugszeichen versehen.

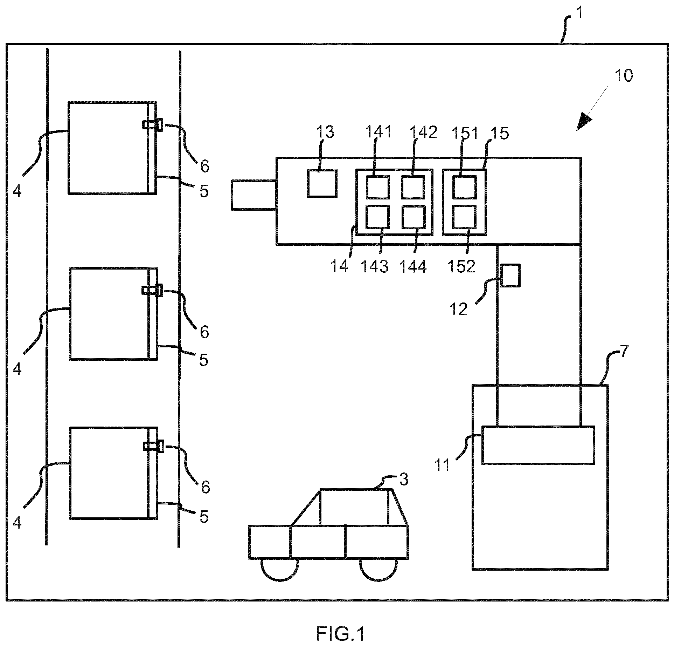

Fig. 1 zeigt sehr schematisch eine Fertigungsanlage 1 zur Fertigung von Gegenständen 3 aus Werkstücken 4, 5, die mit Befestigungsmitteln 6, wie beispielsweise Schrauben verbunden werden. In der Fertigungsanlage 1 ist eine Bewegungsvorrichtung 7 zum Führen eines Werkzeugs 10 vorgesehen, das zum Behandeln der Werkstücke 4, 5 vorgesehen ist. Hierbei kann das Werkzeug 10 die Befestigungsmittel 6 an mindestens einem der Werkstücke 4, 5 befestigen, beispielsweise eine oder mehrere Schraube(n) setzen. Die Werkstücke 4, 5 können insbesondere Karosserieteile eines Fahrzeugs als Gegenstand 3 sein, wobei die Werkstücke 4, 5 mit den Befestigungsmitteln 6 verbunden werden. Hierbei kann das Werkzeug 10 beispielsweise zwei Enden des Werkstücks 4 verbinden oder die Werkstücke 4, 5 oder noch weitere nicht dargestellte Werkstücke miteinander mit einer Schraube als Befestigungsmittel 6 verbinden.

Das Werkzeug 10 ist bei diesem Beispiel also ein Schraubwerkzeug. Das Werkzeug 10 kann jedoch auch ein Bohrwerkzeug oder ein Stanzwerkzeug oder ein Schweißwerkzeug oder ein Nietwerkzeug, insbesondere Blindnietwerkzeug, sein. Das Werkzeug 10 kann jedoch auch ein anderes zur Bearbeitung der Werkstücke 4, 5 geeignetes Werkzeug sein.

Das Werkzeug 10 hat eine Stromversorgungseinrichtung 11, einen Ein-/Ausschalter 12, eine Anzeigeeinrichtung 13, eine Werkzeuganalyseeinrichtung 14 und eine Speichereinrichtung 15. Die Werkzeuganalyseeinrichtung 14 hat eine Erfassungseinheit 141, eine Vergleichseinheit 142, eine Bewertungseinheit 143, und eine Berechnungseinheit 144. In der Speichereinrichtung 15 sind eine vorbestimmte Wegeigenschaft 151 und eine ermittelte Wegeigenschaft 152 speicherbar. Die Wegeigenschaften 151, 152 können eine Wegstrecke oder ein Wegprofil sein.

Bei dem Werkzeug 10 kann die Stromversorgungseinrichtung 11 beispielsweise über ein Netzteil oder mittels einer Batterie, insbesondere einer nicht wieder aufladbaren oder wieder aufladbaren Batterie (Akkumulator), realisiert sein.

Mit den Funktionen der Werkzeuganalyseeinrichtung 14 ist es möglich, die Bewegungen des Benutzers beim Durchführen einer Bearbeitungsaufgabe zur Bearbeitung des Werkstücks 4, 5 mit dem Werkzeug 10 nachzuverfolgen. Dabei erfasst die Erfassungseinheit 141 mit Hilfe beispielsweise einer Software und einem gegebenenfalls extern von der Werkzeuganalyseeinrichtung 14 im Werkzeug 10 angeordneten Sensor zur Erfassung von Bewegungen die Bewegungen, die von dem Benutzer bei der Durchführung der Bearbeitungsaufgabe ausgeführt werden. Dabei werden die Beschleunigungswerte, die bei der Durchführung der Bearbeitungsaufgabe mit dem Werkzeug 10 bei der Bewegung des Werkzeugs 10 im Raum anfallen, auf menschliche Schritte gefiltert. Der Sensor zur Erfassung von Bewegungen für die Erfassungseinheit 141 kann insbesondere einen Gyrosensor und/oder einen Schrittsensor und/oder einen Beschleunigungssensor aufweisen.

Die von der Erfassungseinheit 141 erfassten Bewegungen des Benutzers werden an die Berechnungseinheit 144 weitergeleitet und von der Berechnungseinheit 144 in eine oder mehrere Wegeigenschaften 152, wie Wegstrecke(n) und/oder Wegprofil(e), umgerechnet. Die aus Erfassung und Berechnung ermittelten Wegeigenschaften 152 werden von der Werkzeuganalyseeinrichtung 14 in der Speichereinrichtung 15 gespeichert.

In der Speichereinrichtung 15 ist zudem mindestens eine vorbestimmte Wegeigenschaft 151 gespeichert. Die mindestens eine vorbestimmte Wegeigenschaft 151, wie Wegstrecke(n) und/oder Wegprofil(e), stellt einen Soll-Wert dar, mit dem die Vergleichseinheit 142 die ermittelte Wegeigenschaft 152 als Ist-Wert vergleicht. Eine Wegstrecke im Sinne der vorliegenden Erfindung wird als Länge eines Weges oder Distanz verstanden, die sich bei Bewegung des Benutzers des Werkzeugs 10 entlang eines Weges auf der Erdoberfläche ergibt, beispielsweise an einer Fertigungsanlage. Ein Wegprofil im Sinne der vorliegenden Erfindung gibt die für die Wegstrecke vorhandenen Auf- und/oder Ab- und/oder SeitwärtsBewegungen an.

In der Bewertungseinheit 143 wird dann das Ergebnis des mit der Vergleichseinheit 142 ausgeführten Vergleichs bewertet.

Weicht das Ergebnis bei der Bewertung mit der Bewertungseinheit 143 von der vorbestimmten Wegeigenschaft 151, gegebenenfalls um mehr als einen vorbestimmten Toleranzwert ab, beispielsweise zweihundert Meter, wird auf Veranlassung der Bewertungseinheit 143 von der Werkzeuganalyseeinrichtung 14 ein Warnsignal an die Anzeigeeinrichtung 13 des Werkzeugs 10 weitergeleitet. Die Anzeigeeinrichtung 13 gibt dann das Warnsignal beispielsweise als Ton oder Audiosignal, Zeichen, Bild, usw. aus, um dem Benutzer zu zeigen, dass der Benutzer falsche Bewegungen und/oder zu weite Bewegungen und/oder zu viele Bewegungen zur Fertigung des Werkstücks 4, 5 an der Fertigungsanlage 1 ausführt.

Ist der Wert der ermittelten Wegstrecke als Wegeigenschaft 152 zwar größer als die vorbestimmte Wegstrecke als vorbestimmte Wegeigenschaft 151 jedoch noch kleiner als die vorbestimmte Wegstrecke als Wegeigenschaft 151 plus Toleranzwert, wird von der Werkzeuganalyseeinrichtung 14 kein Signal an die Anzeigeeinrichtung 13 weitergeleitet.

Für den Fall, dass der Wert der ermittelten Wegstrecke bzw. die ermittelte Wegeigenschaft 152 kleiner als der Wert der vorbestimmten Wegstrecke bzw. die vorbestimmte Wegeigenschaft 151 ist, bewertet die Bewertungseinheit 143 die ermittelte Wegstrecke bzw. Wegeigenschaft 152 als besser als die vorbestimmte Wegstrecke bzw. Wegeigenschaft 151. Die ermittelte Wegstrecke bzw. Wegeigenschaft 152 kann dann für nachfolgende Bearbeitungsaufgaben für das Werkzeug 10 als vorbestimmte Wegstrecke bzw. Wegeigenschaft 151 in der Speichereinrichtung 15 gespeichert werden.

Gleichermaßen können der Vergleich und die Bewertung des Wegprofils unter Verwendung von vorbestimmter und ermittelter Wegeigenschaft 151, 152 und gegebenenfalls einem vorbestimmten Toleranzwert erfolgen. Auch der vorbestimmte Toleranzwert kann in der Speichereinrichtung 15 gespeichert sein. Der vorbestimmte Toleranzwert gibt somit zusammen mit der vorbestimmten Wegeigenschaft 151 einen Toleranzbereich mit einem Minimalwert und einem Maximalwert an, zwischen welchen eine Abweichung von der gespeicherten vorbestimmten Wegeigenschaft 151 toleriert wird.

Mit der Werkzeuganalyseeinrichtung 14 des Werkzeugs 10 können somit Fertigungskonzepte bei einer Fertigungsanlage 1 bezüglich ihrer ermittelten Wegeigenschaft 152 verglichen und bewertet werden. Wegeigenschaften, wie eine Wegstrecke und/oder ein Wegprofil, welche Benutzer mit dem Werkzeug 10 an der Fertigungsanlage 1 zurücklegen, werden dadurch transparent gemacht. Dadurch können verschiedene Fertigungskonzepte miteinander verglichen und optimiert werden.

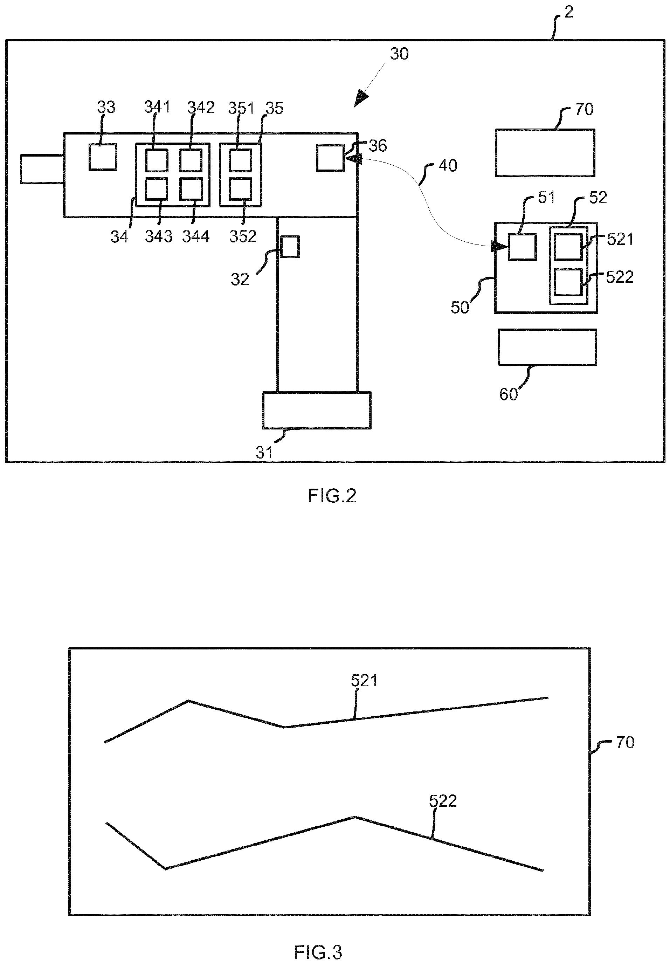

Fig. 2 zeigt eine Fertigungsanlage 2 zur Fertigung von Gegenständen mit einem Werkzeug 30 gemäß einem zweiten Ausführungsbeispiel. Das Werkzeug 30 hat eine Stromversorgungseinrichtung 31, einen Ein-/Ausschalter 32, eine Anzeigeeinrichtung 33, eine Werkzeuganalyseeinrichtung 34 und eine Speichereinrichtung 35. Die Werkzeuganalyseeinrichtung 34 hat eine Erfassungseinheit 341, eine Vergleichseinheit 342, eine Bewertungseinheit 343, und eine Berechnungseinheit 344. In der Speichereinrichtung 35 sind eine vorbestimmte Wegeigenschaft 351 und eine ermittelte Wegeigenschaft 352 speicherbar. Die Wegeigenschaften 351, 352 können eine Wegstrecke oder ein Wegprofil sein.

Das Werkzeug 30 ist bei diesem Beispiel wieder ein Schraubwerkzeug mit weitgehend identischen Funktionen wie bei dem vorangehenden Ausführungsbeispiel in Bezug auf das Werkzeug 10 beschrieben.

Im Unterschied zum vorangehenden Ausführungsbeispiel kann das Werkzeug 30 bei dem vorliegenden Ausführungsbeispiel mit einer Steuervorrichtung 50 der Fertigungsanlage 2 kommunizieren. Hierfür ist das Werkzeug 30 mit der Steuervorrichtung 50 über eine kabelgebundene oder kabellose Verbindung 40 verbunden. Die Steuervorrichtung 50 hat eine Übertragungseinrichtung 51 und eine Speichereinrichtung 52. Zudem sind eine Eingabeeinrichtung 60 und eine externe Anzeigeeinrichtung 70, die extern vom Werkzeug 30 angeordnet ist, vorgesehen.

Zudem hat das Werkzeug 30 eine Übertragungseinrichtung 36. Die Übertragungseinrichtung 36 kann mit Hilfe der Verbindung 40 Daten an die Übertragungseinrichtung 51 der übergeordneten Steuervorrichtung 50 senden und/oder Daten von der Übertragungseinrichtung 51 der übergeordneten Steuervorrichtung 50 empfangen.

In der Speichereinrichtung 52 der Steuervorrichtung 50 ist möglicherweise bereits mindestens eine ermittelte Wegeigenschaft 521, 522 zu Bewegungen des Benutzers gespeichert. Die Bewegungen wurden beim Durchführen einer Bearbeitungsaufgabe zur Bearbeitung des Werkstücks 4, 5 mit der Werkzeuganalyseeinrichtung 34 des Werkzeugs 30 ermittelt. Die mindestens eine ermittelte Wegeigenschaft 521, 522 kann eine Wegstrecke oder ein Wegprofil sein, welche(s) bei einer vorhergehenden Benutzung des Werkzeugs 30 durch Erfassen und Berechnen oder durch Simulation ermittelt wurde.

Ein Benutzer des Werkzeugs 30 kann mit der Eingabeeinrichtung 60 an der Steuervorrichtung 50 eine bereits gespeicherte Wegeigenschaft 521, 522 auswählen, und diese bei einer Bearbeitungsaufgabe zur Bearbeitung des Werkstücks 4, 5 mit dem Werkzeug 30 für die Analyse mit der Werkzeuganalyseeinrichtung 34 zu Grunde legen. Dabei wird die ermittelte Wegeigenschaft 521 von der Übertragungseinrichtung 51 der Steuervorrichtung 50 an die Übertragungseinrichtung 36 des Werkzeugs 30 gesendet. Die gesendete Wegeigenschaft 521 wird dann von der Werkzeuganalyseeinrichtung 34 in einer Speichereinrichtung 35 als vorbestimmte Wegeigenschaft 351 gespeichert.

Die Werkzeuganalyseeinrichtung 34 legt dann bei ihrer Analyse die vorbestimmte Wegeigenschaft 351 zu Grunde, wie zuvor in Bezug auf die Werkzeuganalyseeinrichtung 14 des vorangehenden Ausführungsbeispiels beschrieben.

Zusätzlich ist es möglich, dass die bei der Analyse der Werkzeuganalyseeinrichtung 34 ermittelte Wegeigenschaft 352 für nachfolgende Bearbeitungsaufgaben als vorbestimmte Wegeigenschaft 351 nicht nur in der Speichereinrichtung 35 gespeichert wird, sondern auch an die Übertragungseinrichtung 51 der Steuervorrichtung 50 gesendet wird. Dies ist vor allem dann vorteilhaft, wenn der Wert der ermittelten Wegstrecke als Wegeigenschaft 352 geringer als der Wert der vorbestimmten Wegstrecke als Wegeigenschaft 351, 521 ist und die Bewertungseinheit 343 die ermittelte Wegeigenschaft 352 als besser als die vorbestimmte Wegeigenschaft 351, 521 bewertet.

In der Speichereinrichtung 52 der Steuervorrichtung 50 wird dann die Wegeigenschaft 521 durch die verbesserte ermittelte Wegeigenschaft 352 ersetzt und kann bei nachfolgenden Bearbeitungsaufgaben verwendet werden. Außerdem kann die Wegeigenschaft 521 mit Hilfe der Anzeigeeinrichtung 70 angezeigt werden.

Dadurch können die Wegeigenschaften 521, 522, welche in der Steuervorrichtung 50 gespeichert wurden, für die Durchführung von nachfolgend auszuführenden Bearbeitungsaufgaben optimiert werden.

Gemäß einem dritten Ausführungsbeispiel können die ermittelten Wegeigenschaften der Fertigungsanlage 2 grafisch, beispielsweise auf einem Lageplan, insbesondere auf einem Grundriss der Fertigungsanlage, visualisiert werden, wie in Fig. 3 schematisch veranschaulicht.

Wie in Fig. 3 gezeigt, kann dem Benutzer des Werkzeugs 30 an einer Anzeigeeinrichtung 70 der Fertigungsanlage 2 angezeigt werden, wie er sich beim Durchführen der Bearbeitungsaufgabe zur Bearbeitung des Werkstücks 4, 5 mit dem Werkzeug 30 bewegen soll. Die Anzeige mit der Anzeigeeinrichtung 70 kann beispielsweise mit einem Grundrissplan oder Lageplan der Fertigungsanlage, usw. erfolgen. Die Anzeige ist aufgrund der Genauigkeit der gespeicherten Wegeigenschaften 521, 522 vorteilhaft.

Alternativ oder zusätzlich können die Wegeigenschaften 521, 522 auch auf der Anzeigeeinrichtung 33 am Werkzeug 30 angezeigt werden.

Je nach Bedarf kann zusätzlich oder alternativ bei einer oder beiden der Anzeigeeinrichtungen 33, 70 ein Audiosignal und/oder Zeichen, wie beispielsweise ein Richtungspfeil, usw. angezeigt werden.

Dadurch werden Optimierungen an der Fertigungsanlage 2 und/oder an der Bearbeitungsaufgabe eines Bearbeiters weiter vereinfacht. Fertigungskonzepte können miteinander verglichen werden und dabei die effizienteste Lösung gewählt werden.

Alle zuvor beschriebenen Ausgestaltungen der Werkzeuganalyseeinrichtung 14, 34 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

In der Fertigungsanlage 1, 2 kann auch mehr als ein Werkzeug 10, 30 zum Einsatz kommen. Hierbei können bei der Fertigungsanlage 2 auch die Daten aller Werkzeuganalyseeinrichtungen 14, 34 von der Steuervorrichtung 50 bearbeitet und/oder gespeichert werden.

Außerdem ist es denkbar, dass die Werkzeuganalyseeinrichtung 14, 34 in stationärer Technik eingesetzt wird, um Verfahrwege von Fertigungsanlagen 1 und Robotern zu optimieren.

Der Toleranzwert, welcher bei der Bewertung mit der Bewertungseinheit 143, 343 dafür zugrunde gelegt wird, ob mit der Anzeigeeinrichtung 13, 33 ein Warnsignal angezeigt wird, kann über eine nicht dargestellte Eingabeeinrichtung am Werkzeug 10, 30 von einem Benutzer verstellt werden. Das Verstellen des Toleranzwerts ist zusätzlich oder alternativ auch über die Eingabeeinrichtung 60 an der übergeordneten Steuervorrichtung 50 möglich.

Die Werkzeuganalyseeinrichtung 14, 34 kann als Software ausgestaltet sein. Die Werkzeuganalyseeinrichtung 14, 34 kann in dem Werkzeug 10, 30 ab Werk vorhanden sein. Es ist jedoch auch möglich, die Werkzeuganalyseeinrichtung 14, 34 nachträglich, beispielsweise als Applikation, auf dem Werkzeug 10, 30 und/oder der Bewegungsvorrichtung 7 zu installieren.

Auch die Anzeigeeinrichtung 13 des Werkzeugs 10 kann die Funktionen der Anzeigeeinrichtungen 33, 70 haben, die in Bezug auf das dritte Ausführungsbeispiel beschrieben sind.

In einer oder mehreren der Speichereinrichtungen 15, 35, 52 kann/können mindestens eine vorbestimmte Wegeigenschaft 151, 351, 521, 522 in Abhängigkeit von dem Teil der Fertigungsanlage 1, 2 gespeichert sein, in welcher die Bewegung des Benutzers mit dem Werkzeug 10, 30 erfasst wurde. Auch diese vorbestimmte Wegeigenschaft 151, 351, 521, 522 in Abhängigkeit von dem Teil der Fertigungsanlage 1, 2 kann bei der Analyse der entsprechenden Werkzeuganalyseeinrichtung 14, 34 herangezogen werden.

## Patentansprüche

1. Werkzeuganalyseeinrichtung (14; 34) zur Analyse einer Bearbeitung eines Werkstücks (3; 4) mit einem Werkzeug (10; 30), wobei die Werkzeuganalyseeinrichtung (14; 34) aufweist eine Erfassungseinheit (141; 341) zur Erfassung von Bewegungen eines Benutzers des Werkzeugs (10; 30), die bei Erfüllung einer Bearbeitungsaufgabe zur Bearbeitung eines Werkstücks (3; 4) mit dem Werkzeug (10; 30) ausgeführt werden, eine Vergleichseinheit (142; 342) zum Vergleichen einer Wegeigenschaft (152; 352) die aus den mit der Erfassungseinheit (13; 33) erfassten Bewegungen des Benutzers ermittelt wurde, mit einer vorbestimmten Wegeigenschaft (151; 351; 521; 522), und eine Bewertungseinheit (143; 343) zur Bewertung des Ergebnisses der Vergleichseinheit (142; 342) in Bezug auf einen geringstmöglichen Bewegungsaufwand für den Benutzer, wobei zusätzlich eine Berechnungseinheit (144; 344) zur Berechnung einer Wegstrecke (211; 411) aus der mit der Erfassungseinheit (141; 341) erfassten Bewegung vorgesehen ist, die der Benutzer mit dem Werkzeug (10; 30) ausgeführt hat, und aus Beschleunigungswerten in Bezug auf Schritte des Benutzers des Werkzeugs (10; 30), und zur Berechnung eines Wegprofils aus der mit der Erfassungseinheit (141; 341) erfassten Bewegung, die der Benutzer mit dem Werkzeug (10; 30) ausgeführt hat.

2. Werkzeuganalyseeinrichtung (14; 34) nach Anspruch 1, wobei die vorbestimmte Wegeigenschaft (151; 351; 521; 522) mindestens eine vorbestimmte Wegstrecke und/oder mindestens ein vorbestimmtes Wegprofil für mindestens einen Teil einer Fertigungsanlage (1) sind/ist, in welcher das Werkzeug (10; 30) einsetzbar ist, und/oder wobei die Vergleichseinheit (142; 342) ausgestaltet ist, mindestens eine vorbestimmte Wegeigenschaft (151; 351; 521; 522) in Abhängigkeit von dem Teil der Fertigungsanlage (1) auszuwählen, in welcher die Bewegung des Benutzers mit dem Werkzeug (10; 30) erfasst wurde.

3. Werkzeuganalyseeinrichtung (14; 34) nach Anspruch 1 oder 2, wobei die Werkzeuganalyseeinrichtung (14; 34) zur Ausgabe der erfassten Bewegungen des Benutzers an eine Anzeigeeinrichtung (13; 33; 70) ausgestaltet ist, um mit der Anzeigeeinrichtung (13; 33; 70) mindestens eine Wegeigenschaft (151; 152; 351; 352; 521; 522) mindestens eines Werkzeugs (30) grafisch darzustellen, und/oder wobei die Werkzeuganalyseeinrichtung (14; 34) zur Ausgabe von ermittelten Wegeigenschaften (152; 352) an eine übergeordnete Steuervorrichtung (50) und/oder zum Empfangen von vorbestimmten Wegeigenschaften (151; 351; 521; 522) einer übergeordneten Steuervorrichtung (50) ausgestaltet ist.

4. Werkzeuganalyseeinrichtung (20; 40) nach einem der vorhergehenden Ansprüche, wobei die Werkzeuganalyseeinrichtung (14; 34) ausgestaltet ist, die mindestens eine ermittelte Wegeigenschaft (152; 352) und/oder die mindestens eine vorbestimmte Wegeigenschaft (151; 351; 521; 522) derart auszugeben, dass die Anzeigeeinrichtung (13; 33; 70) die Wegeigenschaft(en) als Lageplan anzeigt.

5. Werkzeuganalyseeinrichtung (14; 34) nach einem der vorangehenden Ansprüche, wobei die Werkzeuganalyseeinrichtung (14; 34) zur Ausgabe eines Warnsignals an eine Anzeigeeinrichtung (13; 33; 70) ausgestaltet ist, falls ein Ergebnis eines Vergleichs der Vergleichseinheit (142; 342) einen vorbestimmten Toleranzwert überschreitet.

6. Werkzeuganalyseeinrichtung (14; 34) nach einem der vorangehenden Ansprüche, wobei die Erfassungseinheit (141; 341) einen Gyrosensor aufweist oder als Software ausgestaltet ist, welche zum Empfang eines Erfassungssignals eines Gyrosensors ausgestaltet ist, und/oder wobei die Werkzeuganalyseeinrichtung (14; 34) als Software zur Installation auf einem Werkzeug zur Verwendung bei der Bearbeitung eines Werkstücks ausgestaltet ist.

7. Werkzeug (10; 30), mit einer Werkzeuganalyseeinrichtung (14; 34) nach einem der vorangehenden Ansprüche, wobei das Werkzeug (10; 30) ein Schraubwerkzeug oder ein Bohrwerkzeug oder ein Nietwerkzeug oder ein Stanzwerkzeug oder ein Schweißwerkzeug ist, und/oder wobei das Werkzeug (10; 30) ein handgehaltenes Werkzeug (10; 30) ist.

8. Bewegungsvorrichtung (7) zum Bewegen eines Werkzeugs (10; 30), wobei die Bewegungsvorrichtung (7) eine Werkzeuganalyseeinrichtung (14; 34) nach einem der vorangehenden Ansprüche aufweist und zur Führung eines Werkzeugs (10; 30) nach Anspruch 7 ausgestaltet ist.

9. Verfahren zur Analyse einer Bearbeitung eines Werkstücks (3; 4) mit einer Werkzeuganalyseeinrichtung (14; 34) gemäß einem der vorhergehenden Ansprüche, eines Werkzeugs (10; 30), mit den Schritten:
Erfassen, mit einer Erfassungseinheit (141; 341) von Bewegungen eines Benutzers des Werkzeugs (10; 30), die bei Erfüllung einer Bearbeitungsaufgabe zur Bearbeitung eines Werkstücks (3; 4) mit dem Werkzeug (10; 30) ausgeführt werden,
Vergleichen, mit einer Vergleichseinheit (142; 342) einer Wegeigenschaft (152; 352), die aus den mit der Erfassungseinheit (141; 341) erfassten Bewegungen des Benutzers ermittelt wurde, mit einer vorbestimmten Wegeigenschaft (151; 351; 521; 522), und
Bewerten, mit einer Bewertungseinheit (143; 343), des Ergebnisses der Vergleichseinheit (142; 342) in Bezug auf einen geringstmöglichen Bewegungsaufwand für den Benutzer.

## Claims

1. Tool analysis device (14; 34) for analysing machining of a workpiece (3; 4) using a tool (10; 30), wherein the tool analysis device (14; 34) has a recording unit (141; 341) for recording movements of a user of the tool (10; 30) that are carried out when a machining task for machining a workpiece (3; 4) is performed using the tool (10; 30), a comparison unit (142; 342) for comparing a path property (152; 352), ascertained from the movements of the user that are recorded using the recording unit (13; 33), with a predetermined path property (151; 351; 521; 522), and a rating unit (143; 343) for rating the result of the comparison unit (142; 342) in relation to a lowest possible movement effort for the user, wherein there is additionally provision for a computation unit (144; 344) for calculating a path length (211; 411) from the movement recorded using the recording unit (141; 341) that the user has carried out with the tool (10; 30), and from acceleration values in relation to steps of the user of the tool (10; 30), and for calculating a path profile from the movement recorded using the recording unit (141; 341) that the user has carried out with the tool (10; 30).

2. Tool analysis device (14; 34) according to Claim 1, wherein the predetermined path property (151; 351; 521; 522) is at least one predetermined path length and/or at least one predetermined path profile for at least one part of a production installation (1) in which the tool (10; 30) is usable, and/or wherein the comparison unit (142; 342) is configured to select at least one predetermined path property (151; 351; 521; 522) on the basis of the part of the production installation (1) in which the movement of the user with the tool (10; 30) has been recorded.

3. Tool analysis device (14; 34) according to Claim 1 or 2, wherein the tool analysis device (14; 34) is configured to output the recorded movements of the user to a display device (13; 33; 70) in order to use the display device (13; 33; 70) to graphically represent at least one path property (151; 152; 351; 352; 521; 522) of at least one tool (30), and/or wherein the tool analysis device (14; 34) is configured to output ascertained path properties (152; 352) to a superordinate control apparatus (50) and/or to receive predetermined path properties (151; 351; 521; 522) of a superordinate control apparatus (50).

4. Tool analysis device (20; 40) according to one of the preceding claims, wherein the tool analysis device (14; 34) is configured to output the at least one ascertained path property (152; 352) and/or the at least one predetermined path property (151; 351; 521; 522) such that the display device (13; 33; 70) displays the tool property (properties) as a site plan.

5. Tool analysis device (14; 34) according to one of the preceding claims, wherein the tool analysis device (14; 34) is configured to output a warning signal to a display device (13; 33; 70) if a result of a comparison of the comparison unit (142; 342) exceeds a predetermined tolerance value.

6. Tool analysis device (14; 34) according to one of the preceding claims, wherein the recording unit (141; 341) has a gyro sensor or is in the form of software configured to receive a recording signal of a gyro sensor and/or wherein the tool analysis device (14; 34) is configured as software for installation on a tool for use when machining a workpiece.

7. Tool (10; 30) having a tool analysis device (14; 34) according to one of the preceding claims, wherein the tool (10; 30) is a screwing tool or a drilling tool or a riveting tool or a punching tool or a welding tool, and/or wherein the tool (10; 30) is a handheld tool (10; 30).

8. Movement apparatus (7) for moving a tool (10; 30), wherein the movement apparatus (7) has a tool analysis device (14; 34) according to one of the preceding claims and is configured to guide a tool (10; 30) according to Claim 7.

9. Method for analysing machining of a workpiece (3; 4) using a tool analysis device (14; 34), according to one of the preceding claims, of a tool (10; 30), having the steps of:
recording, using a recording unit (141; 341), movements of a user of the tool (10; 30) that are carried out when performing a machining task for machining a workpiece (3; 4) using the tool (10; 30),
comparing, using a comparison unit (142; 342), a path property (152; 352), ascertained from the movements of the user that are recorded using the recording unit (141; 341), with a predetermined path property (151; 351; 521; 522), and
rating, using a rating unit (143; 343), the result of the comparison unit (142; 342) in relation to a lowest possible movement effort for the user.

## Revendications

1. Dispositif d'analyse d'outil (14; 34) pour l'analyse d'un usinage d'une pièce à usiner (3; 4) avec un outil (10; 30), dans lequel le dispositif d'analyse d'outil (14; 34) présente une unité de détection (141; 341) pour la détection de mouvements d'un utilisateur de l'outil (10; 30), qui sont effectués lors de l'accomplissement d'une tâche d'usinage pour l'usinage d'une pièce à usiner (3; 4) avec l'outil (10; 30), une unité de comparaison (142; 342) pour la comparaison d'une caractéristique de chemin (152; 352) qui a été déterminée à partir des mouvements de l'utilisateur détectés avec l'unité de détection (13; 33), avec une caractéristique de chemin prédéterminée (151; 351; 521; 522), et une unité d'évaluation (143; 343) pour l'évaluation du résultat de l'unité de comparaison (142; 342) par rapport à un travail de déplacement le plus faible possible pour l'utilisateur, dans lequel il est en outre prévu une unité de calcul (144; 344) pour le calcul d'un trajet (211; 411) à partir d'un mouvement détecté avec l'unité de détection (141; 341), que l'utilisateur a effectué avec l'outil (10; 30), et à partir de valeurs d'accélération par rapport à des pas de l'utilisateur de l'outil (10; 30), et pour le calcul d'un profil de chemin à partir du mouvement détecté avec l'unité de détection (141; 341), que l'utilisateur a parcouru avec l'outil (10; 30).

2. Dispositif d'analyse d'outil (14; 34) selon la revendication 1, dans lequel la caractéristique de chemin prédéterminée (151; 351; 521; 522) est au moins un trajet prédéterminé et/ou au moins un profil de chemin prédéterminé pour au moins une partie d'une installation de production (1), dans laquelle l'outil (10; 30) peut être utilisé, et/ou dans lequel l'unité de comparaison (142; 342) est configurée pour sélectionner au moins une caractéristique de chemin prédéterminée (151; 351; 521; 522) en fonction de la partie de l'installation de production (1), dans laquelle le mouvement de l'utilisateur avec l'outil (10; 30) a été détecté.

3. Dispositif d'analyse d'outil (14; 34) selon une revendication 1 ou 2, dans lequel le dispositif d'analyse d'outil (14; 34) est configuré pour l'envoi des mouvements détectés de l'utilisateur à un dispositif d'affichage (13; 33; 70), afin de représenter graphiquement avec le dispositif d'affichage (13; 33; 70) au moins une caractéristique de chemin (151; 152; 351; 352; 521; 522) d'au moins un outil (30), et/ou dans lequel le dispositif d'analyse d'outil (14; 34) est configuré pour envoyer des caractéristiques de chemin déterminées (152; 352) à un dispositif de commande de niveau supérieur (50) et/ou pour recevoir des caractéristiques de chemin prédéterminées (151; 351; 521; 522) d'un dispositif de commande de niveau supérieur (50).

4. Dispositif d'analyse d'outil (20; 40) selon l'une quelconque des revendications précédentes, dans lequel le dispositif d'analyse d'outil (14; 34) est configuré pour envoyer ladite au moins une caractéristique de chemin déterminée (152; 352) et/ou ladite au moins une caractéristique de chemin prédéterminée (151; 351; 521; 522) de telle manière que le dispositif d'affichage (13; 33; 70) affiche la/les caractéristique(s) de chemin sous forme de plan de situation.

5. Dispositif d'analyse d'outil (14; 34) selon l'une quelconque des revendications précédentes, dans lequel le dispositif d'analyse d'outil (14; 34) est configuré pour envoyer un signal d'avertissement à un dispositif d'affichage (13; 33; 70), dans le cas où un résultat d'une comparaison de l'unité de comparaison (142; 342) dépasse une valeur de tolérance prédéterminée.

6. Dispositif d'analyse d'outil (14; 34) selon l'une quelconque des revendications précédentes, dans lequel l'unité de détection (141; 341) présente un capteur gyroscopique ou est configurée comme logiciel qui est conçu pour la réception d'un signal de détection d'un capteur gyroscopique, et/ou dans lequel le dispositif d'analyse d'outil (14; 34) est configuré comme logiciel à installer sur un outil en vue de son utilisation lors de l'usinage d'une pièce à usiner.

7. Outil (10; 30) avec un dispositif d'analyse d'outil (14; 34) selon l'une quelconque des revendications précédentes, dans lequel l'outil (10; 30) est un outil de vissage ou un outil de forage ou un outil de rivetage ou un outil d'estampage ou un outil de soudage, et/ou dans lequel l'outil (10; 30) est un outil à main (10; 30) .

8. Dispositif de déplacement (7) pour le déplacement d'un outil (10; 30), dans lequel le dispositif de déplacement (7) présente un dispositif d'analyse d'outil (14; 34) selon l'une quelconque des revendications précédentes et est configuré pour le guidage d'un outil (10; 30) selon la revendication 7.

9. Procédé d'analyse d'un usinage d'une pièce à usiner (3; 4) avec un dispositif d'analyse d'outil (14; 34) selon l'une quelconque des revendications précédentes, d'un outil (10; 30), présentant les étapes suivantes:
détecter, avec une unité de détection (141; 341), des mouvements d'un utilisateur de l'outil (10; 30), qui sont effectués lors de l'accomplissement d'une tâche d'usinage pour l'usinage d'une pièce à usiner (3; 4) avec l'outil (10; 30),
comparer, avec une unité de comparaison (142; 342), une caractéristique de chemin (152; 352), qui a été déterminée à partir des mouvements de l'utilisateur détectés avec l'unité de détection (141; 341), avec une caractéristique de chemin prédéterminée (151; 351; 521; 522), et
évaluer, avec une unité d'évaluation (143; 343), le résultat de l'unité de comparaison (142; 342) par rapport à un travail de déplacement le plus faible possible pour l'utilisateur.
